# EUROPÄISCHE PATENTSCHRIFT

(11) **EP 1 503 057 B1**
(45) Veröffentlichungstag und Bekanntmachung des Hinweises auf die Patenterteilung: **28.01.2009**
(21) Anmeldenummer: 04102770.7
(22) Anmeldetag: 17.06.2004
(51) Int. Cl.: F02B 29/00, F02B 29/08, F02B 27/02, F02D 9/12, F16K 1/12, F16K 1/14

(54) **Verfahren zur Herstellung eines Ventiltellers eines Ventilgliedes einer Zusatzsteuerventileinrichtung**
Method of manufacturing the head of a valve member of an additional control valve
Méthode de fabriquer la tête d'un élément soupape d'une soupape de commande additionnelle

(30) Priorität: 31.07.2003 DE 10335128
(43) Veröffentlichungstag der Anmeldung: 02.02.2005
(73) Patentinhaber: Continental Automotive GmbH, 30165 Hannover (DE)
(72) Erfinder: Colic, Rajko, 61350, Bad Homburg (DE); Hannewald, Thomas, 64347, Griesheim (DE); Severien, Herbert, 63589, Linsengericht (DE)

(56) Entgegenhaltungen:
- DE-A- 10 137 828
- GB-A- 1 100 609
- GB-A- 1 260 541
- US-A- 4 271 862
- US-A- 4 488 566
- US-A- 5 584 270

## Beschreibung

Die Erfindung bezieht sich auf ein Verfahren zur Herstellung eines Ventiltellers eines Ventilgliedes einer Zusatzsteuerventileinrichtung.

Ventilteller von Ventilgliedern von Zusatzsteuerventileinrichtungen sind bekannt. In der
DE 101 37 828 A1 wird eine in einem Einlasskanal einer Kolbenbrennkraftmaschine angeordnete Zusatzsteuerventileinrichtung in ihrer Funktionsweise beschrieben. Bei einer solchen Zusatzsteuerventileinrichtung ist es vorgesehen, ein Ventilglied anzuordnen, das im Wesentlichen pilzförmig ausgebildet ist. Bei diesem Ventilglied ist an einem Schaft ein hutförmiger Ventilteller angeordnet, der zu der vom Einlassventil abgewandten Seite hin konkav mit einem Scheitelpunkt ausgebildet ist. Innerhalb einer Führung des Schaftes sind Federn angeordnet, durch die eine Art schwingungsfähiges System geschaffen wird. Die Eigenfrequenz des schwingungsfähigen Systems wird dabei durch die Federkonstanten und das Gewicht des Ventilgliedes gegeben. Die magnetischen Eigenschaften des Ventilgliedes werden unter anderem durch den Wandstärkenverlauf im magnetischen Wirkbereich gewährleistet. Bei diesem Ventilglied ist jedoch nachteilig, dass bei der Großserienfertigung durch Kaltfließpressen gerade im Bereich erforderlicher dünner Wanddicken relativ hohe Werkzeugkräfte benötigt werden, was zu einem relativ schnellen Werkzeugverschleiß führt.

Der Erfindung liegt daher die Aufgabe zugrunde, ein Verfahren zur Herstellung eines Ventiltellers eines Ventilgliedes einer Zusatzsteuerventileinrichtung zu schaffen, das besonders vorteilhaft in der Großserienfertigung eingesetzt werden kann, wobei relativ hohe Werkzeugkräfte weitgehendst vermieden werden können. Darüber hinaus soll mit diesem Verfahren ein Ventilteller für ein Ventilglied hergestellt werden können, dessen Eigenschaften relativ niedrige Schaltzeiten des Ventilgliedes ermöglichen.

Die der Erfindung zugrunde liegende Aufgabe wird durch ein Verfahren zur Herstellung eines Ventiltellers eines Ventilgliedes einer Zusatzsteuerventileinrichtung gelöst, bei dem in einem ersten Schritt ein tellerförmiger Grundkörper aus einem metallischen Werkstoff hergestellt wird, der außen einen durchgehend ringförmigen Bereich aufweist und der zwischen dem ringförmigen Bereich und einem rohrförmigen Innenteil mindestens zwei Aussparungen aufweist, bei dem in einem zweiten Schritt jeweils ein scheibenförmiges Teil aus einem Kautschuk mit seinem Außenbereich auf jeweils einen umlaufenden Randbereich, der eine Aussparung umgibt, auf die konvexe Außenseite des Grundkörpers aufgelegt wird und in einem dritten Schritt das scheibenförmige Teil mit dem umlaufenden Randbereich durch Aufvulkanisieren verbunden wird. Die Zusatzsteuerventileinrichtung dient zur Impulsaufladung von Otto- und Dieselmotoren. Die Impulsaufladung bewirkt dabei eine Erhöhung der Zylinderfüllung und damit eine Steigerung des Drehmoments im niedrigen und mittleren Drehzahlbereich. Das Ventilglied besteht aus der Kombination von Ventilteller und Schaft. Die Herstellung des Grundkörpers aus dem metallischen Werkstoff erfolgt beispielsweise durch Drehen oder Tiefziehen. Das rohrförmige Innenteil kann beispielsweise konisch oder trichterförmig ausgebildet sein und dient der Aufnahme des Schaftes. Es ist jedoch auch möglich, den tellerförmigen Grundkörper und den Schaft aus einem Einzelteil zu fertigen. Der Außenbereich des scheibenförmigen Teils hat wie der umlaufende Randbereich eine Breite, die im Bereich zwischen 0,5 und 2,5 mm liegt. Das Aufvulkanisieren erfolgt durch das ingenieurmäßige Einstellen der Verfahrensparameter, die im Wesentlichen abhängig sind von den eingesetzten Wanddicken. In der Regel kann das Aufvulkanisieren bei 250 bar, 180°C bis 190 °C während einer Behandlungszeit von 3 bis 4 Minuten erfolgen. Diese Angaben sind jedoch nicht zwingend und können je nach Anwendungsfall variieren. Der durchgehend ringförmige Bereich hat in der Draufsicht die Form eines Kreisringes und dient als eigentlicher Ventilsitz. Er kann aus einem anderen Material gefertigt sein als das Material, das die mindestens zwei Aussparungen voneinander trennt. Die mindestens zwei Aussparungen haben beispielsweise die Form von Halbkreisflächen. Je nach Anwendungsfall können bis zu 30 Aussparungen vorgesehen werden, welche dann schlitzförmig ausgebildet sind. Je nach Einsatzzweck kommen jedoch auch beliebig andere Lochformen zur Anwendung. Es hat sich in überraschender Weise gezeigt, dass sich bei der Herstellung des Ventiltellers relativ hohe Werkzeugkräfte weitgehend vermeiden lassen. Dies ist besonders dann vorteilhaft, wenn der tellerförmige Grundkörper durch Kaltfließpressen oder Tiefziehen hergestellt wird. Dies wirkt sich vorteilhaft auf die Lebensdauer der Werkzeuge aus. Aufgrund der Anordnung der mindestens zwei Aussparungen kann das Ventilglied insgesamt leichter bauen, so dass niedrigere Schaltzeiten erreicht werden können als das bei Ventiltellern der Fall ist, die keine Aussparungen aufweisen.

Eine bevorzugte Ausgestaltung der Erfindung besteht darin, dass vier Aussparungen, die gleichförmig gestaltet sind, angeordnet werden, die jeweils voneinander durch Stege getrennt sind. Dabei ist vorteilhaft, dass die gewünschten mechanischen Festigkeiten sowie die Nachgiebigkeit des Ventiltellers im Bereich der vier Aussparungen auf relativ einfache Weise durch die Geometrie der Stege eingestellt werden können. Für viele Einsatzzwecke hat sich dabei beispielsweise eine Stegbreite im Bereich von 3 bis 5 mm bewährt. Eine relativ große Nachgiebigkeit kann auch dann noch eingestellt werden, wenn die Stege eine Breite von 1 mm aufweisen. In diesem Fall ist ferner vorteilhaft, dass die Gefahr der Durchrostung zusätzlich noch verringert wird, so dass die mechanische Festigkeit über relativ lange Betriebszeiten gewährleistet ist.

Gemäß einer weiteren bevorzugten Ausgestaltung der Erfindung werden scheibenförmige Teile aus Fluor-Kautschuk oder aus hydriertem Nitril-Butadien-Kautschuk eingesetzt. Dabei ist vorteilhaft, dass das Aufvulkanisieren relativ schnell erfolgen kann, wobei gleichzeitig sehr feste Verbindungen zwischen dem tellerförmigen Grundkörper und dem Kautschuk realisiert werden können.

Nach einer weiteren bevorzugten Ausgestaltung der Erfindung ist vorgesehen, dass die Wanddicke des jeweiligen umlaufenden Randbereiches kleiner ausgeführt wird als die Wanddicke des ringförmigen Bereiches. Diese Maßnahme erleichtert das Aufvulkanisieren und dient somit der rationellen Durchführung des Verfahrens.

Gemäß einer weiteren Ausgestaltung der Erfindung wird der jeweilige umlaufende Randbereich gegenüber der konvexen Außenseite des ringförmigen Bereiches in Richtung auf die Innenwand des Ventiltellers versetzt angeordnet. Dadurch wird in vorteilhafter Weise eine umlaufende Ringnut geschaffen, in die das jeweilige scheibenförmige Teil mit seinem Außenbereich im zweiten Schritt des Verfahrens eingelegt werden kann. Besonders vorteilhaft ist dabei der Fall, dass die Dicke des Außenbereiches der Tiefe der umlaufenden Ringnut entspricht. Dies erleichtert zum einen das Aufvulkanisieren und ermöglicht ferner eine Optimierung der konvexen Außenseite des Ventiltellers im Hinblick auf strömungstechnische Gegebenheiten.

Die Erfindung wird nachfolgend anhand der Zeichnung (Fig. 1 bis Fig. 4) näher und beispielhaft erläutert.
- Fig. 1: zeigt den Ventilteller im Querschnitt.
- Fig. 2: zeigt den tellerförmigen Grundkörper in der Draufsicht.
- Fig. 3: zeigt den tellerförmigen Grundkörper in dreidimensionaler Form.
- Fig. 4: zeigt das Ventilglied mit dem Schaft im Querschnitt.

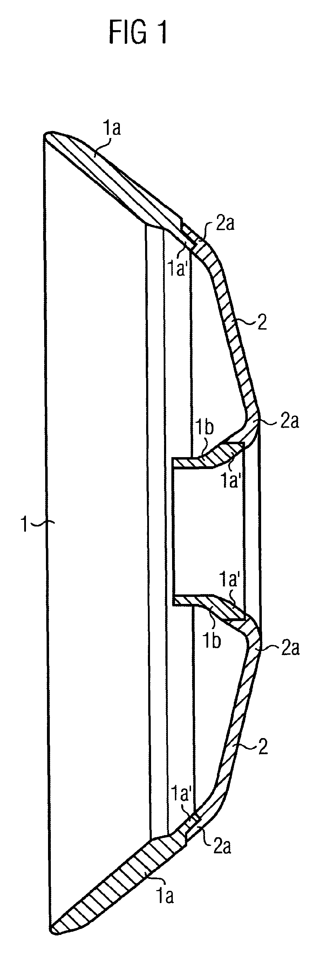

In Fig. 1 ist der Ventilteller eines Ventilgliedes einer Zusatzsteuerventileinrichtung im Querschnitt dargestellt. Er besteht aus einem tellerförmigen Grundkörper 1, der in einem ersten Schritt aus einem metallischen Werkstoff hergestellt wird. Der tellerförmige Grundkörper 1 weist außen einen durchgehend ringförmigen Bereich 1a auf. Zwischen dem ringförmigen Bereich 1a und einem rohrförmigen Innenteil 1b, das trichterförmig gestaltet ist, sind jeweils zwei Aussparungen für jeweils ein scheibenförmiges Teil 2 dargestellt. Bei dem zweiten Schritt wird jeweils ein scheibenförmiges Teil 2 aus einem Kautschuk mit seinem Außenbereich 2a auf jeweils einen umlaufenden Randbereich 1a' auf die konvexe Außenseite des Grundkörpers 1 aufgelegt. In einem dritten Schritt erfolgt das Verbinden des jeweiligen scheibenförmigen Teils 2 mit dem umlaufenden Randbereich 1a' durch Aufvulkanisieren. Die Wanddicke des jeweils umlaufenden Randbereiches 1a' ist kleiner ausgeführt als die Wanddicke des ringförmigen Bereiches 1a. Dies wird auch dadurch realisiert, dass der jeweilige umlaufende Randbereich 1a' gegenüber der konvexen Außenseite des ringförmigen Bereiches 1a in Richtung auf die Innenwand des Ventiltellers versetzt angeordnet wird. Dadurch wird vorteilhaft eine konvexe Außenseite des Ventiltellers ohne größere Absätze erreicht, was sich besonders vorteilhaft auf die Strömungsverhältnisse in der Zusatzsteuerventileinrichtung auswirkt.

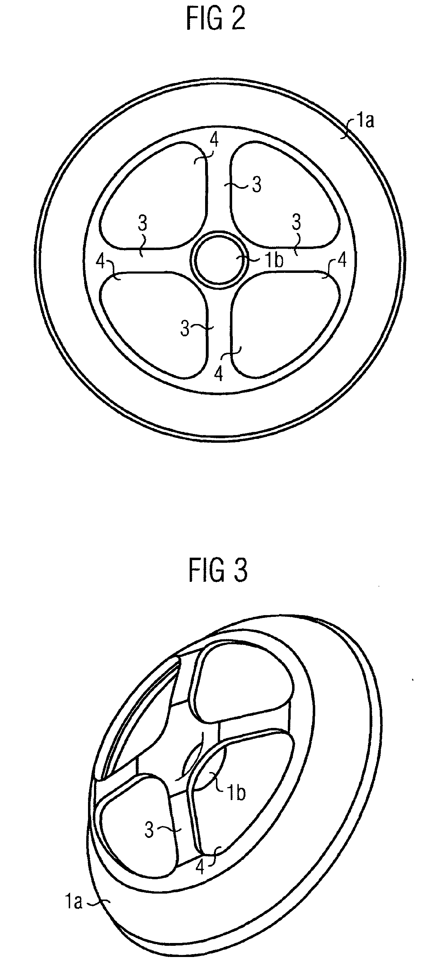

In Fig. 2 ist die Draufsicht auf einen tellerförmigen Grundkörper dargestellt. Der tellerförmige Grundkörper weist vier Aussparungen 4 auf, die gleichförmig gestaltet sind und die jeweils voneinander durch Stege 3 getrennt sind.

In Fig. 3 ist der tellerförmige Grundkörper dreidimensional gemäß Fig. 2 dargestellt. Der rohrförmige Innenteil 1b dient der Fixierung des Schaftes (nicht dargestellt).

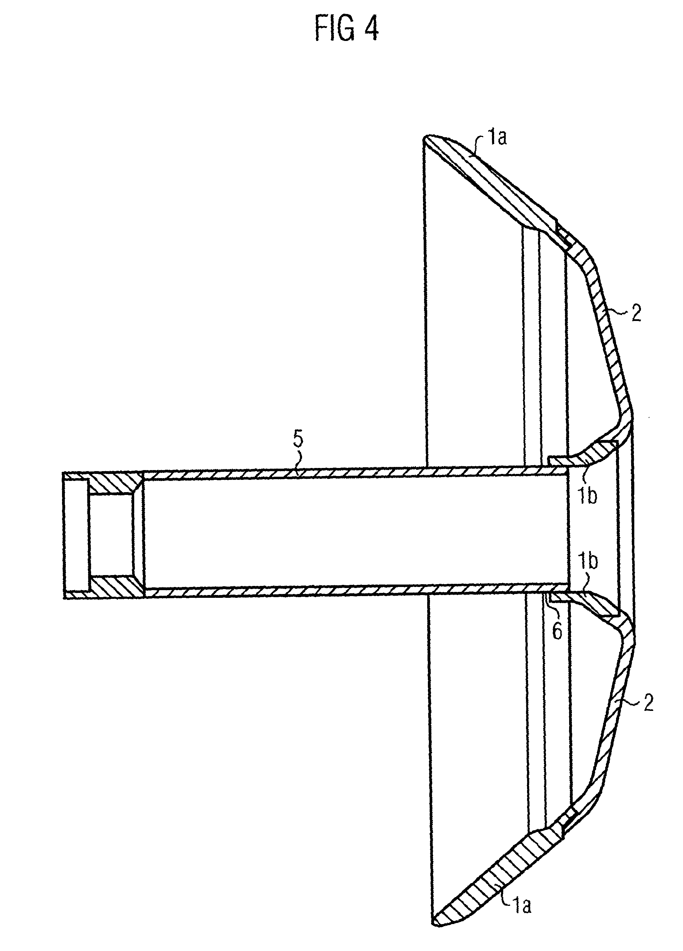

In Fig. 4 ist das Ventilglied im Querschnitt dargestellt. Der Schaft 5 ist an der Verbindungsstelle 6 mit dem rohrförmigen Innenteil 1b des Ventiltellers verbunden.

## Patentansprüche

1. Verfahren zur Herstellung eines Ventiltellers eines Ventilgliedes einer Zusatzsteuerventileinrichtung, bei dem in einem ersten Schritt ein tellerförmiger Grundkörper (1) aus einem metallischen Werkstoff hergestellt wird, der außen einen durchgehend ringförmigen Bereich (1a) aufweist und der zwischen dem ringförmigen Bereich (1a) und einem rohrförmigen Innenteil (1b) mindestens zwei Aussparungen (4) aufweist, bei dem in einem zweiten Schritt jeweils ein scheibenförmiges Teil (2) aus einem Kautschuk mit seinem Außenbereich (2a) auf jeweils einen umlaufenden Randbereich (1a'), der eine Aussparung (4) umgibt, auf die konvexe Außenseite des Grundkörpers (1) aufgelegt wird und in einem dritten Schritt das scheibenförmige Teil (2) mit dem umlaufenden Randbereich (1a') durch Aufvulkanisieren verbunden wird.

2. Verfahren nach Anspruch 1, bei dem vier Aussparungen (4), die gleichförmig gestaltet sind, angeordnet werden, die jeweils voneinander durch Stege (3) getrennt sind.

3. Verfahren nach Anspruch 1 oder Anspruch 2, bei dem scheibenförmige Teile (2) aus Fluor-Kautschuk oder hydriertem Nytril-Butadien-Kautschuk eingesetzt werden.

4. Verfahren nach einem der Ansprüche 1 bis 3, bei dem die Wanddicke des jeweiligen umlaufenden Randbereiches (1a') kleiner ausgeführt wird als die Wanddicke des ringförmigen Bereiches (1a).

5. Verfahren nach Anspruch 4, bei der der jeweilige umlaufende Randbereich (1a') gegenüber der konvexen Außenseite des ringförmigen Bereiches (1a) in Richtung auf die Innenwand des Ventiltellers versetzt angeordnet wird.

## Claims

1. Process for manufacturing a valve head of a valve member of an additional control valve device, wherein, in a first step, a plate-shaped base body (1) is produced from a metallic material, said base body having a continuously annular region (1a) on the outside and having at least two cutouts (4) between the annular region (1a) and a tubular inner part (1b), wherein, in a second step, a respective disc-shaped part (2) made from a rubber is placed onto the convex outer side of the base body (1) with its outer region (2a) on a respective encompassing edge region (1a') which surrounds a cutout (4), and, in a third step, the disc-shaped part (2) is connected to the encompassing edge region (1a') by being vulcanized on.

2. Process according to Claim 1, wherein four cutouts (4) which are designed to be identical and are respectively separated from one another by means of webs (3) are provided.

3. Process according to Claim 1 or Claim 2, wherein disc-shaped parts (2) made from fluororubber or hydrogenated nitrile-butadiene rubber are used.

4. Process according to one of Claims 1 to 3, wherein the wall thickness of the respective encompassing edge region (1a') is designed to be smaller than the wall thickness of the annular region (1a).

5. Process according to Claim 4, wherein the respective encompassing edge region (1a') is arranged offset with respect to the convex outer side of the annular region (1a) in the direction towards the inner wall of the valve head.

## Revendications

1. Procédé permettant de fabriquer la tête d'un élément de soupape dans un dispositif additionnel à soupape de distribution, procédé au cours duquel, au cours d'une première étape, on fabrique, à partir d'une matière première métallique, un corps de base (1) en forme de plateau, lequel a, extérieurement, une zone (1a) circulaire et continue et comporte, entre la zone circulaire (1a) et une partie intérieure (1b) de forme tubulaire, au moins deux évidements (4), procédé au cours duquel, au cours d'une deuxième étape, une pièce (2) en forme de rondelle en caoutchouc est appliquée par sa partie extérieure (2a) sur une bordure périphérique (1a') entourant un évidement (4), sur le côté extérieur convexe du corps de base (1) et, au cours d'une troisième étape, la pièce (2) en forme de rondelle est liée par vulcanisation à la partie périphérique (1a').

2. Procédé selon la revendication 1, au cours duquel quatre évidements (4), lesquels sont conçus avec la même forme, sont mis en place et sont séparés l'un par rapport à l'autre par des entretoises (3).

3. Procédé selon la revendication 1 ou la revendication 2, au cours duquel sont mises en oeuvre des pièces (2) en forme de rondelle en caoutchouc au fluor ou en caoutchouc au nitrile butadiène hydrogéné.

4. Procédé selon l'une des revendications 1 à 3, au cours duquel l'épaisseur de paroi de la bordure périphérique (1a') respective est plus faible que l'épaisseur de paroi de la zone circulaire (1a).

5. Procédé selon la revendication 4, au cours duquel la bordure périphérique (1a') respective est placée en face de la face extérieure convexe de la zone circulaire (1a) avec un décalage dans la direction de la paroi intérieure de la tête de soupape.
